(19) Europäisches Patentamt / European Patent Office / Office européen des brevets

(11) **EP 2 882 653 B1**

(12) **EUROPÄISCHE PATENTSCHRIFT**

(45) Veröffentlichungstag und Bekanntmachung des Hinweises auf die Patenterteilung:
**03.01.2018  Patentblatt 2018/01**

(21) Anmeldenummer: **13750638.2**

(22) Anmeldetag: **08.08.2013**

(51) Int Cl.:
*B65B 63/02* *(2006.01)*      *B65B 59/00* *(2006.01)*
*B65B 65/00* *(2006.01)*      *B65B 57/14* *(2006.01)*
*B65B 35/24* *(2006.01)*      *B65B 35/26* *(2006.01)*
*B65B 35/40* *(2006.01)*      *B65B 5/04* *(2006.01)*
*B65B 5/06* *(2006.01)*

(86) Internationale Anmeldenummer:
**PCT/EP2013/002370**

(87) Internationale Veröffentlichungsnummer:
**WO 2014/023428 (13.02.2014 Gazette 2014/07)**

(54) **FERTIGUNGS- UND VERPACKUNGSANLAGE FÜR HYGIENEPRODUKTE UND VERFAHREN ZUM BETREIBEN DERSELBEN**

PRODUCTION AND PACKAGING INSTALLATION FOR HYGIENE PRODUCTS AND METHOD FOR OPERATING THE SAME

INSTALLATION DE FABRICATION ET D'EMBALLAGE POUR PRODUITS D'HYGIÈNE ET UN PROCÉDÉ POUR SON OPÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2012   DE 102012015820**

(43) Veröffentlichungstag der Anmeldung:
**17.06.2015   Patentblatt 2015/25**

(73) Patentinhaber: **Focke & Co. (GmbH & Co. KG)**
**27283 Verden (DE)**

(72) Erfinder:
• **JELKEN, Andreas**
  **26676 Barssel (DE)**
• **SCHLOERMANN, Marco**
  **26835 Neukamperfehn (DE)**

(74) Vertreter: **Aulich, Martin**
**Meissner Bolte Patentanwälte**
**Rechtsanwälte Partnerschaft mbB**
**Hollerallee 73**
**28209 Bremen (DE)**

(56) Entgegenhaltungen:
EP-A1- 1 127 791          WO-A1-2013/004325
DE-A1-102010 053 040    US-A1- 2005 055 988

**Beschreibung**

Die vorliegende Erfindung betrifft ein Verfahren zum Betreiben einer Fertigungs-und Verpackungsanlage für Hygieneprodukte, wie Windeln, Binden oder dergleichen, mit den Merkmalen des Oberbegriffs des Anspruchs 1 sowie eine Fertigungs- und Verpackungsanlage mit den Merkmalen des Oberbegriffs des Anspruchs 13.

Die Leistungen von Herstellmaschinen zur Herstellung von Hygieneprodukten, die in einer entsprechenden Produktionslinie eingesetzt werden, sind in den vergangenen Jahren entwicklungsbedingt immer weiter angestiegen. Entsprechend muss die Leistung der im Produktionsprozess nachfolgenden Verpackungsmaschine Schritt halten, um die hergestellten Produkte in der vorgegebenen Geschwindigkeit verarbeiten zu können. Alternativ hierzu ist im Stand der Technik, allerdings bisher nur sehr vereinzelt, der Weg beschritten worden, in einer Produktionslinie jeweils zwei identische Verpackungsmaschinen einzusetzen, wie zum Beispiel in US2005/055988 A1. Mit anderen Worten werden bei diesem Konzept einer Herstellmaschine zwei Verpackungsmaschinen zugeordnet. Dabei wird im Stand der Technik die Anzahl der hergestellten Hygieneprodukte hälftig nach einem festen Schema auf die identischen Verpackungsmaschinen verteilt. Die Verpackungsmaschinen sind entlang des Förderwegs eines taktweise bewegten, die von der Herstellmaschine stammenden Produkte aufnehmenden Gruppierförderers mit mehreren Aufnahmen bzw. Fächern für die Produkte angeordnet. Jede Aufnahme des Gruppierförderers wird dabei mit einer nicht veränderbaren, vor Produktionsbeginn festgelegten Anzahl von Hygieneprodukten befüllt. Die Produkte werden anschließend aus den Aufnahmen nach einem festen Schema entweder der einen oder der anderen Verpackungsmaschine zugeführt.

Nachteilig hierbei ist unter anderem, dass beide Maschinen nur jeweils identische Gebindegrößen bzw. Verpackungen mit jeweils identischer Anzahl von darin enthaltenen Produkten fertigen können. Weiter ist ungünstig, dass die gesamte Anlage still steht, sobald eine der beiden Verpackungsmaschinen ausfällt.

Ausgehend hiervon ist es Aufgabe der Erfindung, ein Verfahren der eingangs genannten Art zum Betreiben einer Fertigungs- und Verpackungsanlage für Hygieneprodukte sowie eine entsprechende Anlage weiterzuentwickeln.

Diese Aufgabe wird gelöst durch ein Verfahren mit den Merkmalen des Anspruches 1 sowie durch eine Fertigungs- und Verpackungsanlage mit den Merkmalen des Anspruches 13.

Bei dem erfindungsgemäßen Verfahren zum Betreiben einer Fertigungs- und Verpackungsanlage für Hygieneprodukte werden insbesondere gleichartige Hygieneprodukte von einer Fertigungseinheit zum Herstellen derselben - Herstellmaschine - hergestellt und die hergestellten Hygieneprodukte später von mindestens zwei der Herstellmaschine zugeordneten Fertigungseinheiten zum Verpacken derselben - Verpackungsmaschine - verpackt. Das Verpacken kann dabei insbesondere versandfertig erfolgen.

Die von der Herstellmaschine produzierten Hygieneprodukte werden vor dem Verpacken einzeln und nacheinander einem bevorzugt kontinuierlich umlaufenden Gruppierförderer mit einzelnen Aufnahmen oder Fächern für die Hygieneprodukte zugefördert, dem die mindestens zwei Verpackungsmaschinen zugeordnet sind. Die einzelnen Aufnahmen werden jeweils in der Regel unter Bildung einer Produktgruppe mit mehreren Hygieneprodukten befüllt, beispielsweise mit zwei, drei oder vier Produkten. Grundsätzlich ist aber zumindest theoretisch auch denkbar, ein, mehrere oder sämtliche Aufnahmen mit nur einem Hygieneprodukt zu befüllen.

Das einzelne Hygieneprodukt oder die Hygieneproduktgruppe jeder Aufnahme wird anschließend der jeweiligen Aufnahme des Förderers entnommen und einer der dem Gruppierförderer zugeordneten Verpackungsmaschinen zugefördert. Die Entnahme erfolgt bevorzugt mittels einer geeigneten Entnahmevorrichtung, beispielsweise einem Ausschieborgan, die die Produkte aus den Aufnahmen entnimmt.

Die entsprechende Maschine verpackt das Hygieneprodukt/die Hygieneproduktgruppe der Aufnahme anschließend in eine geeignete Verpackung in der Regel zusammen mit einem oder mehreren Hygieneprodukten/Hygieneproduktgruppen aus einem oder mehreren weiteren Aufnahmen des Gruppierförderers. Eine solche Verpackung kann ein Beutel oder eine Faltschachtel oder dergleichen sein.

Erfindungsgemäß ist nun vorgesehen, dass mindestens zwei der dem Gruppierförderer zugeordneten Verpackungsmaschinen auf der Steuerungsebene eine Maschinengruppe bilden. In der Regel werden dabei sämtliche der zugeordneten Verpackungsmaschinen Teil der Maschinengruppe sein. Dies muss aber nicht so sein.

Erfindungsgemäß wird die Anzahl von Hygieneprodukten, mit der die einzelnen Aufnahmen des Endlosförderers jeweils befüllt werden, für jede Aufnahme automatisch abhängig davon gewählt, für welche der Verpackungsmaschinen der Maschinengruppe das Hygieneprodukt oder die Hygieneproduktgruppe der jeweiligen Aufnahme bestimmt ist.

Mit anderen Worten wird während des Produktionsprozesses automatisch und individuell für jede Aufnahme festgelegt, welcher Verpackungsmaschine das Produkt oder die Produktgruppe zugeführt wird, das/die sich in der Aufnahme befindet. Weiter wird individuell für jede Aufnahme die Anzahl von Produkten festgelegt, die in die Aufnahme eingebracht wird. Durch diese Maßnahmen ist es möglich, dem Gruppierförderer eine variable, individuell auf die einzelnen Verpackungsmaschinen bzw. auf die von diesen herstellbare Verpackungsprodukte abgestimmte Befüllung bzw. einen Befüllungsplan mit Hygieneprodukten vorzugeben bzw. den Gruppierförderer entsprechend der Befüllung bzw. entsprechend dem Befüllungsplan zu befüllen.

So kann im Produktionsprozess beispielsweise zunächst eine bestimmte Anzahl von Aufnahmen des Gruppierförderers mit Hygieneprodukten befüllt werden, die für eine erste Verpackungsmaschine bestimmt sind. Eine bestimmte Anzahl von im Förderprozess unmittelbar nachfolgenden Aufnahmen des Gruppierförderers, die beispielsweise für eine zweite Verpackungsmaschine bestimmt sind, kann dann jeweils mit anderen Mengen von Hygieneprodukten befüllt werden, usw. Hierdurch ist es möglich, mit ein und derselben Produktionslinie innerhalb desselben Fertigungs- und Verpackungsprozesses unterschiedliche Gebindegrößen bzw. unterschiedliche Verpackungen mit jeweils einer unterschiedlich großen Anzahl von Produkten auf unterschiedlichen Verpackungsmaschinen zu verpacken. Mindestens eine Verpackungsmaschine der Maschinengruppe kann die Hygieneprodukte daher in Verpackungen verpacken, die sich hinsichtlich der Anzahl der in ihnen enthaltenen Hygieneprodukte von den Verpackungen mindestens einer anderen Verpackungsmaschine der Maschinengruppe unterscheiden.

Bevorzugt wird/ist dabei vor dem Befüllen jede Aufnahme des Gruppierförderers automatisch jeweils einer der Verpackungsmaschinen der Maschinengruppe derart eindeutig zugeordnet, dass das in der entsprechenden Aufnahme befindliche Hygieneprodukt bzw. die darin befindliche Hygieneproduktgruppe für die zugeordnete Verpackungsmaschine der Maschinengruppe eindeutig bestimmt ist und später entsprechend automatisch dieser zugeordneten Verpackungsmaschine zugeführt wird. Diese Zuordnung übernimmt die Steuerung, insbesondere eine zentrale Steuerung der Fertigungs- und Verpackungsanlage oder gegebenenfalls auch eine der den einzelnen Maschinen zugeordneten Steuerungen, etwa die Steuerung der Herstellmaschine.

Bevorzugt werden dabei die einzelnen Aufnahmen jeweils einzelnen Registern in der Steuerung zugeordnet. Zudem werden die Aufnahmen vorzugsweise steuerungstechnisch jeweils einer der Verpackungsmaschinen bzw. einer individuellen Kennung einer der Verpackungsmaschinen zugeordnet. Die Aufnahmen und entsprechend die in ihnen enthaltenen Produkte werden dann im weiteren Ablauf während der Förderbewegung des Gruppierförderers in der Steuerung weiterverfolgt.

Wie oben bereits angedeutet, kann bei Befüllung der Aufnahmen des Gruppierförderers eine für eine bestimmte zu produzierende Verpackung vorgesehene Anzahl von Hygieneprodukten automatisch auf mehrere Aufnahmen aufgeteilt werden, insbesondere in Teilgruppen. Die Aufteilung der Hygieneprodukte auf die einzelnen Aufnahmen kann sich je nach Anzahl der später in der jeweiligen Verpackung enthaltenen Hygieneprodukte unterscheiden. Vorzugsweise wird für den Fall eines Ausfalls einer Verpackungsmaschine in der Steuerung der Maschinengruppe jede der der ausgefallenen Verpackungsmaschine zugeordneten Aufnahmen automatisch einer anderen Verpackungsmaschine der Maschinengruppe zugeordnet.

Dabei kann vorgesehen sein, dass Hygieneprodukte bzw. Hygieneproduktgruppen, die sich bei Ausfall der Verpackungsmaschine in in dieser Verpackungsmaschine in diesem Moment noch zugeordneten Aufnahmen befinden, automatisch einer anderen Verpackungsmaschine zugeführt werden. Dies jedenfalls insofern die Anzahl der in diesen Aufnahmen befindlichen Hygieneprodukten geeignet ist, von der anderen Verpackungsmaschine ordnungsgemäß verpackt zu werden. Vorzugsweise werden die aktuellen Produktions- bzw. Verpackungsleistungen der Verpackungsmaschinen der oben definierten Maschinengruppe bzw. die entsprechenden Werte derselben jeweils durch eine Steuerungseinrichtung der Fertigungs- und Verpackungsanlage automatisch angepasst nach Maßgabe des insbesondere aktuellen Leistungswerts der Herstellmaschine und/oder nach Maßgabe der einzelnen, jeweils insbesondere aktuell verfügbaren Leistungswerte der Verpackungsmaschinen der Maschinengruppe.

An dieser Stelle sei klarstellend erwähnt, dass die Wendung "und/oder" sowohl in den Patentansprüchen als auch in der Beschreibung in Kurzform die beiden Alternativen "und" sowie "oder" im Sinne der logischen Verknüpfung "und" *oder* "oder" beschreiben soll.

Diese Ausführungsform der Erfindung hat unter anderem den besonderen Vorteil, dass automatisch, beispielsweise bei Erhöhung der Leistung der Herstellmaschine, die entsprechenden Leistungswerte der Verpackungsmaschine auch erhöht werden können. Ähnliches gilt bei einer Leistungsreduktion der Herstellmaschine. Weiter können die Leistungswerte der einzelnen Verpackungsmaschinen individuell angepasst werden, natürlich in den Grenzen, in denen innerhalb der minimalen bzw. maximalen Leistungsgrenzen der Maschinen eine solche Leistungsanpassung möglich ist.

Beispielsweise für den Fall, dass der aktuelle Leistungswert einer Verpackungsmaschine der Maschinengruppe, insbesondere aufgrund einer Störung oder eines Ausfalls, reduziert ist oder reduziert wird, insbesondere auf Null, wird bevorzugt der jeweilige Leistungswert einer oder jeder anderen Verpackungsmaschine der Maschinengruppe automatisch erhöht, um den Leistungsausfall zu kompensieren.

Weiter kann vorgesehen sein, dass im Normalbetrieb der Verpackungsmaschinen der Maschinengruppe deren jeweilige Leistungswerte nach Maßgabe der eingestellten Leistung der Herstellmaschine automatisch auf den jeweilig geringstmöglichen Wert eingestellt wird, bei dem sichergestellt ist, dass sämtliche von der Herstellmaschine hergestellten Hygieneprodukte von den dem Gruppierförderer zugeordneten Verpackungsmaschinen ordnungsgemäß verpackt werden können.

In weiterer Ausbildung der Erfindung wird für den Fall, dass die maximal einstellbaren Leistungswerte der dem Gruppierförderer zugeordneten Verpackungsmaschinen nicht ausreichen, um sämtliche der bei dem eingestellten Leistungswert der Herstellmaschine von der Herstellmaschine stammenden Hygieneprodukte zu verpacken, der Leistungswert der Herstellmaschine automatisch auf einen Wert reduziert, bei dem sämtliche hergestellten Hygieneprodukte verpackt werden können. Bevorzugt wird der Leistungswert dabei auf den größtmöglichen Wert reduziert, bei dem die vorgenannte Bedingung erfüllt ist.

Vorzugsweise werden im Rahmen der Umsetzung der Erfindung die aktuellen bzw. die Ist-Leistungswerte der einzelnen Verpackungsmaschinen der Maschinengruppe und die aktuellen bzw. die Ist-Leistungswerte der Herstellmaschine erfasst und einer zentralen Steuerungseinrichtung der Anlage übermittelt. Die zentrale Steuerungseinrichtung kann dann abhängig von den erfassten Werten Leistungsvorgabewerte für die einzelnen Verpackungsmaschinen der Maschinengruppe und/oder der Herstellmaschine ermitteln.

Die Leistungsvorgabewerte für die genannten Maschinen können dann beispielsweise jeweils an lokale Maschinensteuerungen übermittelt werden, die jeweils den einzelnen Verpackungsmaschinen sowie der Herstellmaschine zugeordnet sind.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus den beigefügten Zeichnungen.

Darin zeigt:

Fig. 1    eine vereinfachte Prinzipskizze einer Fertigungs- und Verpackungsanlage für Hygieneprodukte,

Fig. 2    eine Übersichtsdarstellung einer erfindungsgemäßen Befüllung von Aufnahmen bzw. Fächern eines Gruppierförderers der Fertigungs- und Verpackungsanlage,

Fig. 3    ein weiteres Ablaufdiagramm zur Visualisierung eine Berechnung der erfindungsgemäßen Fächerbefüllung,

Fig. 4    ein stark vereinfachtes Ablaufdiagramm zur Visualisierung der Anpassung der Leistungen der einzelnen Verpackungsmaschinen der Fertigungs- und Verpackungsanlage.

Die Zeichnungen beschäftigen sich mit dem Betreiben bzw. der Steuerung einer Fertigungs- und Verpackungsanlage 10 für Hygieneprodukte 11. Bei den Hygieneprodukten 11 kann es sich beispielsweise um Windeln oder um sogenannte Damenbinden handeln. Diese sind in der Regel verhältnismäßig flach ausgebildet und weisen eine annähernd rechteckige Kontur auf.

Die Hygieneprodukte 11 werden mittels einer bekannten Herstellmaschine F (Converter) hergestellt und über einen ersten Zuförderer 13 einzeln und nacheinander einer Befüllungsstation 14 zugefördert. Im Bereich der Befüllungsstation 14 ist ein Befüllungsorgan S angeordnet, vorliegend ein sogenannter Kegel-Stacker. Mit dem Befüllungsorgan S werden die von dem ersten Zuförderer 13 kommenden, gleichartigen Hygieneprodukte 11 einzeln einem Gruppierförderer 16 zugeführt. Genauer gesagt befüllt das Befüllungsorgan S einzelne Aufnahmen bzw. Fächer des Gruppierförderers 16 mit einem oder mehreren Hygieneprodukten 11.

Der Gruppierförderer 16 ist zu diesem Zweck als an sich bekannter Fächerförderer ausgebildet, das heißt als motorisch angetriebener Endlosförderer mit einem umlaufenden Fördertrum, an dem in Förderrichtung nacheinander eine Vielzahl von einzelnen Fächern bzw. Aufnahmen für die Hygieneprodukte 11 angeordnet sind. Derartige Fächerförderer sind bekannt und beispielsweise in der DE 10 2010 053 040 beschrieben.

Im Bereich der Befüllungsstation 14 befindliche Aufnahmen des Gruppenförderers 16 werden jeweils von dem Befüllungsorgan S mit Hygieneprodukten 11 befüllt. Das Befüllungsorgan S befüllt die Aufnahmen dabei entweder mit einem einzelnen Hygieneprodukt 11 oder zeitlich nacheinander - unter Bildung jeweils von Hygieneproduktgruppen - mit mehreren Hygieneprodukten 11.

Nach dem Befüllen der entsprechenden Aufnahmen wird der Fördertrum des Gruppierförderers 16 weiterbewegt, bis die befüllten Aufnahmen in den Bereich von Entladestationen von im vorliegenden Fall vier entlang des Förderwegs des Gruppierförderers 16 angeordneten Verpackungsmaschinen A, B, C, D gelangen.

Jede der Aufnahmen des Gruppierförderers 16 ist vor dem Befüllvorgang jeweils bereits in der Steuerung einer der Verpackungsmaschinen A-D eindeutig zugeordnet worden. Dies wird später noch näher erläutert. Sobald die befüllten Aufnahmen jeweils in den Bereich der jeweiligen Entladestation der ihnen jeweils zugeordneten Verpackungsmaschine A-D gelangen, werden die in den Aufnahmen befindlichen Hygieneprodukte 11 mittels einer geeigneten Entnahmeeinrichtung aus den zugeordneten Aufnahmen ausgefördert und in der entsprechenden, den Aufnahmen zugeordneten Verpackungsmaschine A-D verpackt.

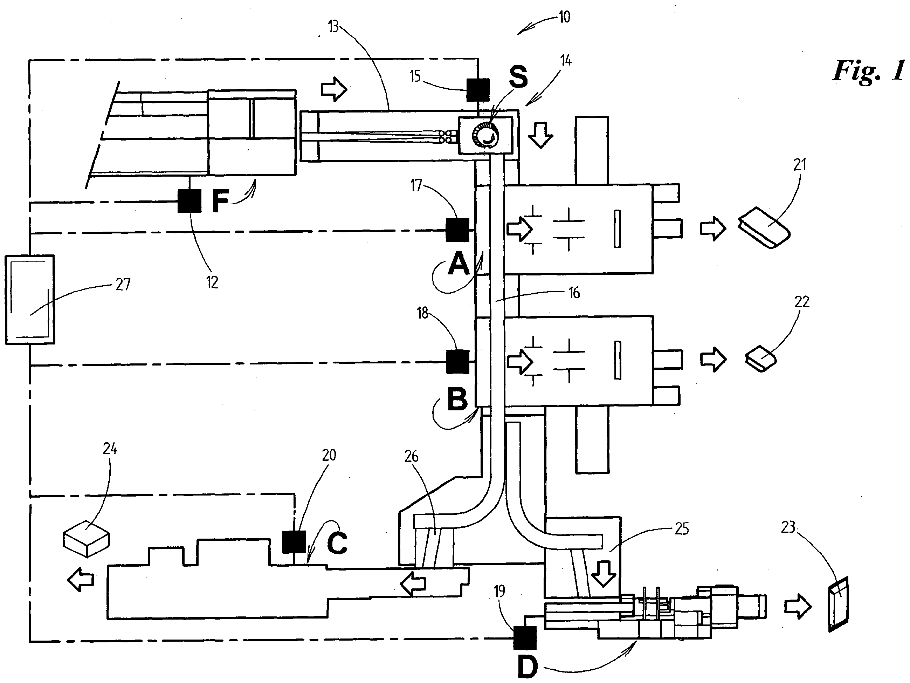

Bei den Verpackungsmaschinen A, B aus Fig. 1 handelt es sich um Beutelpacker (bagger), die jeweils eine vorbestimmte Anzahl von Hygieneprodukten 11 in Beutel 21 bzw. Beutel 22 verpacken. Wie in Fig. 1 erkennbar ist, handelt es sich bei den Beuteln 21, die von der Verpackungsmaschine A produziert werden, um im Vergleich zu den von der Verpackungsmaschine B produzierten Beuteln 22 größere Verpackungseinheiten. In den Verpackungen 21 ist eine größere Anzahl von Hygieneprodukten 11 enthalten als in den Verpackungen 22. Mit anderen Worten sind die Gebinde 21 größer als die Gebinde 22.

Die stromab der Verpackungsmaschinen A, B angeordnete Verpackungsmaschine D (flow wrapper) verpackt eine bestimmte Anzahl von Hygieneprodukten 11 in sogenannte Schlauchbeutelverpackungen 23 (flow packs).

Bei der vierten Verpackungsmaschine C wiederum, die ebenfalls stromab der Verpackungsmaschine A, B angeordnet ist, handelt es sich um einen Faltschachtelpacker, der die Hygieneprodukte 11 in Verpackungen 24 verpackt, nämlich Faltschachteln.

Den Verpackungsmaschinen C, D sind jeweils in sich bekannter Weise Komprimiereinrichtungen 25, 26 zugeordnet, die die von dem Gruppierförderer 16 stammenden Hygieneprodukte 11 zunächst komprimieren, bevor sie in den Verpackungsmaschinen C, D verpackt werden.

Der Fertigungs- und Verpackungsanlage 10 ist zur Steuerung der nachfolgend noch näher beschriebenen Fertigungs- und Verpackungsprozesse eine zentrale Steuerungseinrichtung 27 zugeordnet. Dieser zentralen Steuerungseinrichtung 27 sind über entsprechende Steuerleitungen jeweils lokale Steuerungen 12, 15, 17-20 zugeordnet. So ist die lokale Steuereinheit 12 der Herstellmaschine F zugeordnet, die lokale Steuereinheit 15 dem Befüllungsorgan S, die lokale Steuereinheit 17 der Verpackungsmaschine A, die lokale Steuereinheit 18 der Verpackungsmaschine B, die lokale Steuereinheit 19 der Verpackungsmaschine D sowie die lokale Steuereinheit 20 der Verpackungsmaschine C.

Die jeweiligen lokalen Steuereinheiten 12, 15, 17-20 senden Daten der jeweils zugeordneten Maschine A-D, F bzw. des jeweils zugeordneten Organs S an die zentrale Steuerungseinrichtung 27. Diese verarbeitet die Informationen, errechnet Steuerdaten und sendet diese an die lokalen Steuereinheiten zurück.

Die Daten, die die lokalen Steuereinheiten 12, 15, 17-20 übersenden, können beispielsweise aktuelle Produktionsdaten der zugeordneten Maschine/des zugeordneten Organs A-D, F, S sein, etwa aktuelle Leistungswerte, oder Informationen über Störungen der Maschine/des Organs oder dergleichen mehr.

Die Daten, die die zentrale Steuereinrichtung 27 an die lokalen Steuerungen 12, 15, 17-20 zurücksendet, können beispielsweise Vorgabewerte für die jeweilige Maschine/das jeweilige Organ A-D, F, S umfassen, wie etwa Leistungsvorgaben, oder Informationen über die Zuordnung der einzelnen Aufnahmen des Gruppierförderers 16 zu den einzelnen Verpackungsmaschinen A-D oder dergleichen mehr.

Die Steuerung der Fertigungs- und Verpackungsanlage 10 erfolgt in besonderer Weise. Entweder sämtliche der Anlage zugeordneten Verpackungsmaschinen A-D oder nur eine Auswahl derselben, beispielsweise die beiden Maschinen A, B, bilden auf Steuerungsebene eine Maschinengruppe. Im Weiteren wird davon ausgegangen, dass sämtliche Maschinen A-D die Maschinengruppe bilden. Durch die Steuerung der Anlage 10 wird die Anzahl der Hygieneprodukte 11, mit der die einzelnen Aufnahmen des Gruppierförderers 16 im Bereich der Befüllungsstation 14 befüllt werden, für jede der Aufnahmen automatisch abhängig davon gewählt, für welche der Verpackungsmaschinen A-D der Maschinengruppe das jeweils in die Aufnahme einzubringende Hygieneprodukt 11 bestimmt ist bzw. für den Fall, dass in einer Aufnahme mehrere Produkte 11 als Produktgruppe einzubringen sind, für welche Maschine A-D die jeweilige Hygieneproduktgruppe bestimmt ist.

Zu diesem Zweck wird in der zentralen Steuerung 27, beispielsweise zu Beginn des Produktionsprozesses, jeder Aufnahme des Gruppierförderers 16 eine die jeweilige Maschine A-D, für die der Inhalt der Aufnahme bestimmt ist, identifizierende Kennung zugewiesen. Diese Zuordnung wird in einem geeigneten Speicher abgelegt.

Zudem wird für jede dieser jeweils zugewiesenen Aufnahmen die Anzahl von Hygieneprodukten 11 berechnet, die das Befüllungsorgan S in die jeweilige Tasche füllen soll.

Im Rahmen der Umsetzung dieser Maßnahme kann für jede Aufnahme des Gruppierförderers 16 ein Vorgabewert für die Anzahl der in die Aufnahme einzubringenden Hygieneprodukte 11 erzeugt werden. Diese Vorgabewerte können der Steuereinheit 15 des Befüllungsorgan S mitgeteilt werden, die die Befüllung entsprechend vornimmt.

In die Berechnung der jeweils für die jeweilige Aufnahme vorgesehene Produktanzahl fließt ein, dass in der Regel die Gruppe von Hygieneprodukten 11, die später in einer von einer der Verpackungsmaschinen A-D erzeugten Verpackungseinheit 21-24 enthalten sein soll, auf mehrere, in Förderrichtung nacheinander angeordnete Aufnahmen des Gruppierförderers 16 aufgeteilt wird. Mit anderen Worten setzt sich die Gruppe an Produkten, die in der fertigen Verpackung 21-24 enthalten ist, regelmäßig aus Teilgruppen von Hygieneprodukten 11 zusammen, die in die einzelnen Aufnahmen eingebracht wurden. Die Aufteilung der Hygieneprodukte 11 auf die einzelnen Aufnahmen unter Beachtung der unterschiedlichen Maschinen A-D sowie der verschiedenen Gebindegrößen, die die Maschinen A-D herstellen, ist gegebenenfalls eine komplexe Aufgabe. Diese übernimmt vorzugsweise die zentrale Steuerungseinrichtung 27.

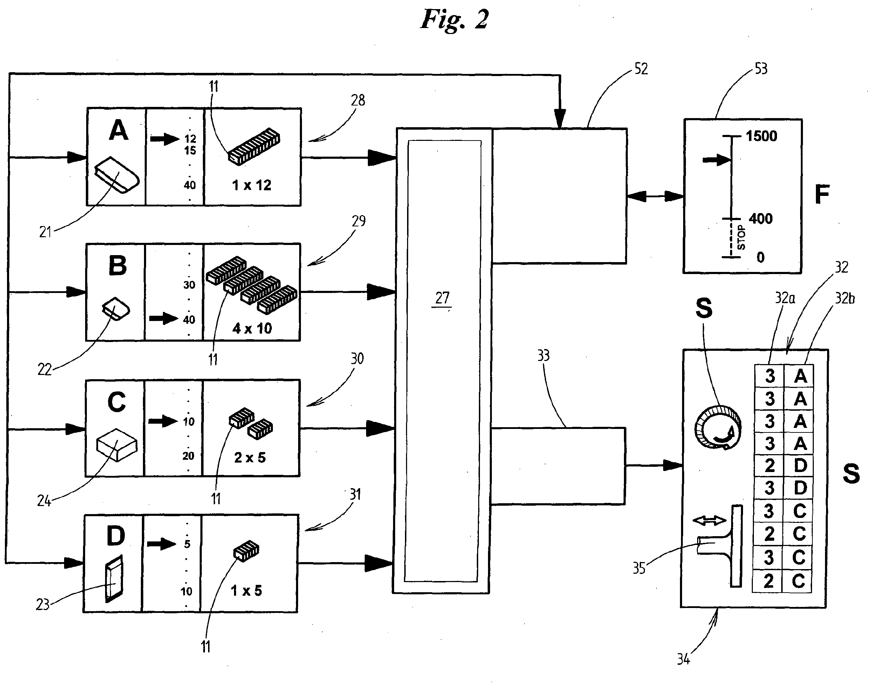

In dem Ausführungsbeispiel entsprechend Fig. 2 umfassen die Verpackungen 21, die von der Verpackungsmaschine A hergestellt werden, zwölf Hygieneprodukte 11. Von der zentralen Steuerung 27 wird der lokalen Steuerung 17 demnach für die herzustellende Verpackungsgröße der Wert zwölf mitgeteilt, vergleiche Steuerungsblock 28 in Fig. 2.

Die von der Verpackungsmaschine B produzierten Verpackungen 22 umfassen jeweils Gruppen von vier mal zehn Hygieneprodukten 11, vergleiche Steuerungsblock 29. Mit anderen Worten sind in einer Verpackung 22 vierzig Hygieneprodukte 11 enthalten.

Die Verpackungsmaschine C produziert Verpackungen 24, die in Gruppen von zwei mal fünf Hygieneprodukten 11 in den Verpackungen 24 enthalten sind. Insgesamt werden demnach zehn Hygieneprodukte 11 in die jeweiligen Verpackungen 24 integriert, vergleiche Steuerungsblock 30.

Die Verpackungsmaschine D schließlich produziert Verpackungen 23, die fünf Hygieneprodukte 11 enthalten, vergleiche Steuerungsblock 31.

Aus diesen Werten sowie aus von den einzelnen Verpackungsmaschinen A-D bekannten Leistungs- bzw. Geschwindigkeitswerten, die sich auf die Anzahl von pro Zeiteinheit von der jeweiligen Maschine A-D verpackbarer Hygieneprodukte 11 oder auf die Anzahl von jeweils pro Zeiteinheit produzierbare Verpackungseinheiten 21-24 beziehen, errechnet die Steuerung 27 eine Abfolge für die Befüllung der Aufnahmen des Gruppierförderers 16, nämlich eine Sortierung 32, vergleiche Steuerungsblock 34. Die Sortierung 32 kann auch zu Beginn des Produktionsprozesses bereits in der Steuerung hinterlegt sein. Anhand der Sortierung 32 wird im Produktionsprozess dann die Befüllung der Aufnahme des Gruppenförderers 16 vorgenommen.

Die Sortierung 32 umfasst allgemein für sämtliche Aufnahmen die Anzahl von Hygieneprodukten 11, mit der eine bestimmte Aufnahme zu befüllen ist sowie die Kennung der Maschine, für die die jeweilige Aufnahme bestimmt ist.

In der Fig. 2 ist ein Auszug der Sortierung 32 in Tabellenform dargestellt, nämlich mit zwei Spalten und einer Anzahl von Zeilen, die der Anzahl und der Abfolge von Aufnahmen des Gruppierförderers 16 entspricht. Jede Zeile ist demnach jeweils einer Aufnahme des Gruppenförderers 16 zugeordnet. Von oben nach unten werden auf diese Weise die in Förderrichtung unmittelbar nacheinander angeordneten bzw. die aufeinander folgenden Aufnahmen symbolisiert.

Jede Zelle der linken Spalte 32a der Sortierung 32 beinhaltet als Wert jeweils die Anzahl der Hygieneprodukte 11, die in der jeweils zugeordneten Aufnahme des Gruppierförderers 16 enthalten ist. Die Zellen der rechten Spalte 32b beinhalten als Wert eine für die jeweilige Maschine A-D repräsentative Kennung, etwa die Maschinenadresse.

Beispielsweise die oberen vier Zeilen der Sortierung 32 zeigen, dass die entsprechend den Zeilen zugeordneten vier in Förderrichtung nacheinander angeordneten Aufnahmen des Gruppierförderers 16 der Verpackungsmaschine A zugeordnet sind. Mit anderen Worten sind die Inhalte dieser Aufnahmen für die Verpackungsmaschine A bestimmt. Im vorliegenden Fall sind jeweils drei Hygieneprodukte 11 in jeder Aufnahme enthalten. Insgesamt sind demnach vier Aufnahmen mit jeweils drei Hygieneprodukten 11 der Verpackungsmaschine A zugeordnet. Diese vier Aufnahmen mit den jeweils drei Hygieneprodukten 11 ergeben insgesamt die pro Verpackungseinheit 21 in einer Verpackung enthaltene Anzahl von zwölf Hygieneprodukten 11. Mit anderen Worten ist die in die Verpackung 21 zu integrierende Produktgruppe von zwölf Hygieneprodukten 11 in vier gleiche Teilgruppen von je drei Hygieneprodukte 11 auf die genannten vier Aufnahmen aufgeteilt.

Die in der Tabelle der Sortierung 32 unmittelbar unterhalb der vier vorgenannten Zeilen nächstfolgenden. Zeilen zeigen, dass die beiden diesen Zeilen zugeordneten Aufnahmen der Maschine D zugeordnet sind. Wie aus der Tabelle zu sehen ist, ergeben die jeweils in den zugeordneten Aufnahmen befindlichen zwei bzw. drei Hygieneprodukte 11 insgesamt fünf Hygieneprodukte 11. Diese fünf Hygieneprodukte 11 werden als Verpackungsinhalt in die von der Maschine D gefertigten Verpackungen 23 integriert.

Die nächsten unmittelbar unterhalb folgenden Zeilen zeigen die nächst folgenden Aufnahmen, die der Maschine C zugeordnet sind, und zwar mit der Produktanzahlfolge 3, 2, 3, 2. Dies ergibt insgesamt zehn Produkte entsprechend der Gebindegröße der von der Maschine C hergestellten Verpackungen 24.

In dem Steuerungsblock 34 ist im Übrigen noch ein Ausschieber 35 symbolisiert. Dieser ist stellvertretend gezeigt für die weiter oben bereits genannten Entnahmeeinrichtungen, mit denen jeweils die einzelnen Inhalte der Aufnahmen des Gruppierförderers 16 im Bereich der jeweiligen Entnahmestation, die der jeweiligen Maschine A-D zugewiesen ist, aus den Aufnahmen entnommen und der entsprechenden Verpackungsmaschine A-D zugeführt werden können.

Wie gut zu erkennen ist, kann jeder Verpackungsmaschine A-D eine individuell auf die jeweilige Verpackungsmaschine bzw. an die jeweilige von der Maschine produzierte Verpackungsart angepasste Befüllung der Aufnahmen des Gruppierförderers 16 vorgegeben werden. Hierdurch ist es möglich, mehrere Verpackungsmaschinen A-D ein und demselben Gruppierförderer 16 zuzuordnen bzw. ein und derselben Herstellmaschine F.

In der Fertigungs- und Verpackungsanlage 10 können auf diese Weise jeweils unterschiedliche Verpackungsarten mit unterschiedlicher Anzahl von darin enthaltenen Hygieneprodukten 11 gleicher Art gefertigt werden. Ohne diese individuell abstimmbare bzw. ohne diese variable Taschenbefüllung bzw. Sortierung 32 müssten sämtlichen an dem Gruppierförderer 16 angeordneten Maschinen jeweils dieselbe Anzahl von Aufnahmen sowie dieselbe Anzahl von in den Aufnahmen enthaltenen Hygieneprodukten 11 zugewiesen werden.

Die Berechnung der Sortierung 32 kann beispielsweise einmal vor Produktionsbeginn erfolgen. Während der Produktion ist aber auch eine automatische Anpassung der Sortierung 32 möglich.

Beispielsweise in dem Fall, dass eine der Verpackungsmaschinen A-D im Produktionsprozess ausfällt, kann die Steuerung 27 die Sortierung 32 automatisch anpassen. Keine der Aufnahmen ist dann im weiteren Produktionsablauf der ausgefallenen Maschine noch weiter zugeordnet. Entsprechend erfolgt die Befüllung der Aufnahme dann nur noch anhand der neuen Sortierung 32, also bezogen auf die weiteren, nicht ausgefallenen Verpackungsmaschinen A-D.

Dabei kann auch vorgesehen sein, dass bereits befüllte Aufnahmen, deren Inhalt bereits einer bestimmten Maschine A-D zugewiesen wurde, sofort unmittelbar nach Ausfall dieser Maschine A-D den übrigen funktionsfähigen Maschinen A-D zugewiesen werden. Dies ist natürlich nur möglich, insofern die Befüllung der Aufnahmen mit Hygieneprodukten 11, die für die ausgefallene Maschine A-D vorgesehen war, auch für die funktionsfähige Maschine A-D bzw. für deren produzierte Verpackung 21-24 passend ist.

Falls dies nicht so ist, werden die genannten Hygieneprodukte 11, die unmittelbar nach dem Maschinenausfall in den der ausgefallenen Maschine A-D zugeordneten Aufnahmen enthalten sind, als Schlechtprodukte ausgeschleust.

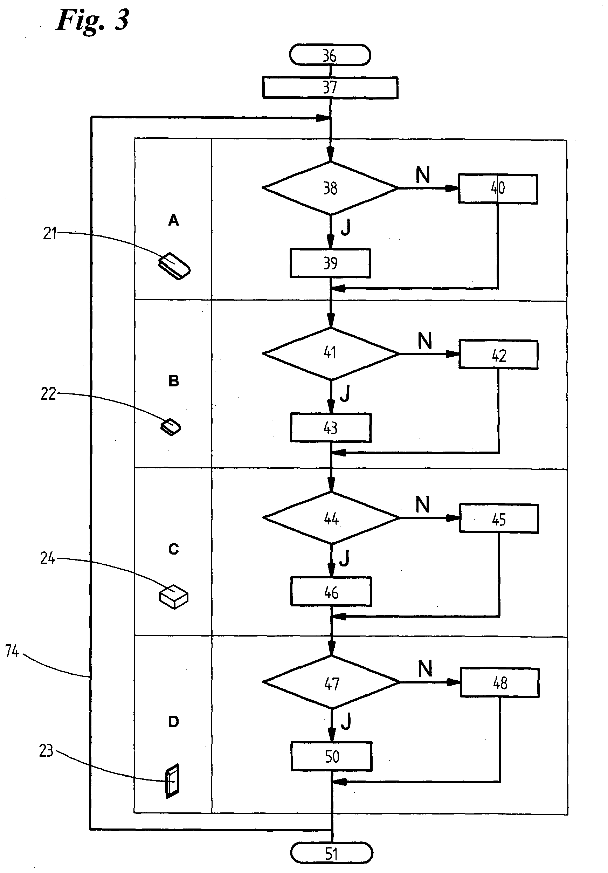

Fig. 3 symbolisiert in stark vereinfachter Darstellung nochmals eine mögliche Vorgehensweise im Rahmen der Berechnung der Aufnahmebefüllung bzw. der Sortierung 32.

Der Beginn der Berechnung wird durch das Symbol (36) repräsentiert. Nach bzw. bei Start der Produktion (36) wird in einem ersten Schritt abgefragt, ob die Verpackungsmaschine A bereit ist (38). Falls dies der Fall ist (J = ja) wird die Sortierung 32 der Aufnahmen des Gruppierförderers 16 unter Einbeziehung der Maschine A berechnet (39).

Falls die Maschine A nicht bereit ist (N = nein), beispielsweise aufgrund einer Störung bzw. eines Ausfalls derselben, wird die Sortierung auf einen Null-Wert gesetzt (40).

In ähnlicher Weise wird im nächsten Schritt abgefragt, ob die Maschine B betriebsbereit ist (41). Falls nicht (N), wird die bisher errechnete Sortierung beibehalten (42). Falls die Maschine B dagegen betriebsbereit ist, wird die Sortierung neu berechnet (43). In die Berechnung wird dann einbezogen, dass (ggf. auch) die Maschine B betriebsbereit ist.

Im nächsten Schritt wird geprüft, ob die Maschine C betriebsbereit ist (44). Falls nicht (N), wird die bisherige berechnete Sortierung beibehalten (45). Falls die Maschine C betriebsbereit ist (J), wird die Sortierung neu berechnet, und zwar unter Einbeziehung (gegebenenfalls auch) der Maschine C (46).

In äquivalenter Weise wird die Betriebsbereitschaft der Maschine D abgefragt und die Sortierung gegebenenfalls neu berechnet (Schritte 47, 48, 50).

Schritt (51) symbolisiert das Ende der Berechnung. Wie der Pfeil 74 symbolisiert, können die Abfragen bzw. kann die Berechnung während des Prozesses mehrfach wiederholt werden, beispielsweise in vorbestimmten Zeitabständen.

Wie bereits oben erwähnt, wird die Berechnung insbesondere dann neu angestoßen, sobald eine der Maschinen A-D eine Störung bzw. einen Ausfall meldet oder allgemein meldet, dass sie nicht mehr betriebsbereit ist.

Ein weiteres besonders wichtiges Verfahren zum Betreiben der Fertigungs- und Verpackungsanlage 10 betrifft die Einstellung der aktuellen, individuellen Verpackungsleistung bzw. Verpackungsgeschwindigkeit der einzelnen Maschinen A-D.

Die Leistungen der Maschinen A-D der Maschinengruppe werden von der zentralen Steuerungseinrichtung 27 automatisch eingestellt nach Maßgabe der aktuellen Produktionsleistung der Herstellmaschine F und/oder nach Maßgabe der einzelnen, jeweils aktuell verfügbaren Produktions- bzw. Verpackungsleistungen der Verpackungsmaschinen A-D der Maschinengruppe.

In Fig. 2 ist mit dem Steuerungsblock 52 dieses Verfahren zur Steuerung der Leistungen der einzelnen Maschinen A-D symbolisiert. Wie zu erkennen ist, geht die aktuelle Leistung der Herstellmaschine F in die Steuerung bzw. Einstellung der jeweiligen Leistungen der Maschinen A-D ein. Anders herum wird gegebenenfalls abhängig von der verfügbaren Leistung der Maschinen A-D auch die aktuelle Leistung der Herstellmaschine auf ein bestimmtes Maß eingestellt.

Beispielsweise für den Fall, dass die Leistung einer der Verpackungsmaschinen A-D, beispielsweise der Verpackungsmaschine A, störungsbedingt reduziert ist, beispielsweise auf den Wert Null, sorgt die Steuerungseinrichtung 27 dafür, dass die übrigen Maschinen B-D ihre Leistungen jeweils derart erhöhen, dass der Leistungsrückgang der Maschine A insgesamt kompensiert wird.

Vorzugsweise wird im Normalbetrieb der Verpackungsmaschinen A-D deren jeweilige Leistung nach Maßgabe der Leistung der Herstellmaschine F automatisch auf den geringstmöglichen Wert eingestellt, bei dem sichergestellt ist, dass sämtliche von der Herstellmaschine F hergestellten Hygieneprodukte 11 von den im Betrieb befindlichen Verpackungsmaschinen A-D verpackt werden können.

Weiter ist vorgesehen, dass dann, wenn die maximal einstellbaren Leistungen der Verpackungsmaschinen A-D nicht ausreichen, um bei der aktuell eingestellten Leistung der Herstellmaschine F die von dieser stammenden Hygieneprodukte 11 zu verpacken, die Leistung der Herstellmaschine F automatisch auf einen Wert reduziert wird, bei dem es möglich ist, sämtliche hergestellten Hygieneprodukte 11 ordnungsgemäß in die entsprechenden Verpackungseinheiten 21-24 zu verpacken. Bevorzugt wird dabei der größtmögliche Leistungswert der Herstellmaschine F eingestellt, bei dem diese Bedingung erfüllt ist.

Wie bereits weiter oben erwähnt wurde, werden zu diesem Zweck zunächst die aktuellen Leistungen bzw. Leistungswerte der Maschinen A-D abgefragt und der zentralen Steuereinrichtung 27 übermittelt. Die zentrale Steuerungseinrichtung 27 kann dann beispielsweise abhängig von den abgefragten Werten Leistungsvorgabewerte für die einzelnen Verpackungsmaschinen und/oder für die Herstellmaschine F errechnen. Die Leistungsvorgabewerte werden dann als Sollwerte jeweils an die lokalen Maschinensteuerungen 12, 15, 17-20 übermittelt.

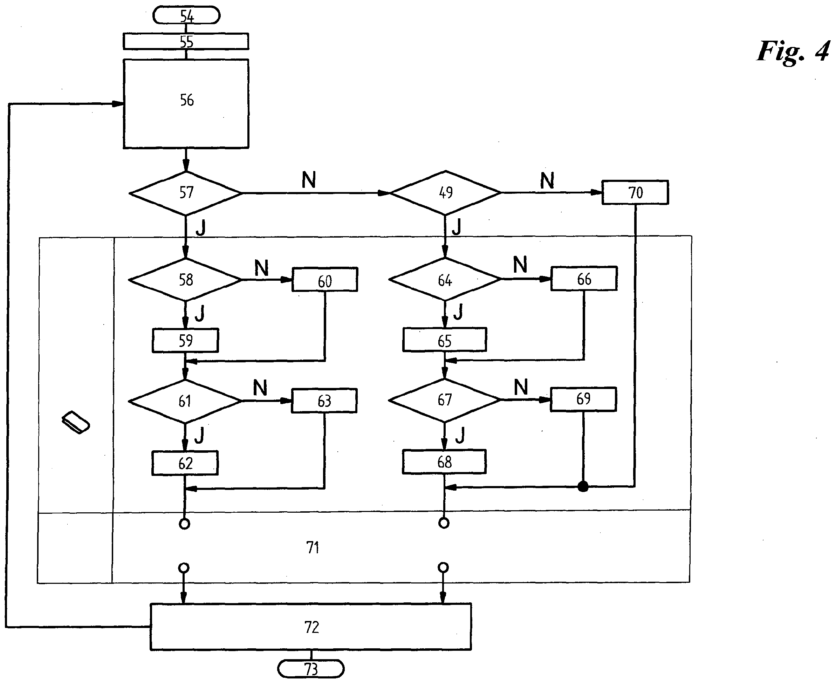

Fig. 4 zeigt in abstrakter Form ein Beispiel eines möglichen Ablaufs zur Berechnung und Festlegung von Leistungsvorgabewerten für zwei Verpackungsmaschinen VPM1 und VPM2 (beispielsweise die Verpackungsmaschinen A und B) sowie für eine Herstellmaschine (beispielsweise die Herstellmaschine F).

Nach Beginn der Berechnung (54) bzw. nach Start der Produktion (55) erfolgt unter anderem die Abfrage und die Berechnung folgender Werte (56):

$$\text{NormVel VPM1} = \text{Geschwindigkeit Herstellmaschine} / \text{Produkte pro Beutel VPM1}$$

$$\text{NormVel VPM2} = \text{Geschwindigkeit Herstellmaschine} / \text{Produkte pro Beutel VPM2}$$

$$\text{AverageVel} = \text{Geschwindigkeit Herstellmaschine} / \Sigma \, (\text{Produkte pro Beutel VPM1; Produkte pro Beutel VPM2})$$

In Schritt (57) wird zunächst abgefragt, ob beide Maschinen VPM1 und VPM2 betriebsbereit sind.

Bejahendenfalls (J) wird im nächsten Schritt (58) abgefragt, ob die Geschwindigkeit bzw. Leistung AverageVel, also die Durchschnittsgeschwindigkeit bzw. Durchschnittsleistung der Anlage, gerechnet in Verpackungseinheiten pro Zeiteinheit (beispielsweise hundert Verpackungseinheiten pro Minute), kleiner ist als der maximale bzw. maximal einstellbare Geschwindigkeitswert der Maschine VPM1. Falls dies der Fall ist (J) wird die einzustellende Geschwindigkeit der Maschine VPM1 zunächst auf diese Anlagendurchschnittsgeschwindigkeit festgelegt (59). Falls dies nicht der Fall ist (N) wird die Geschwindigkeit der Maschine VPM1 auf ihren Maximalwert gesetzt (60).

Im weiteren Schritt (61) wird abgefragt, ob die Durchschnittsgeschwindigkeit der Anlage größer ist als die minimale bzw. minimal einstellbare Maschinengeschwindigkeit der Maschine VPM1. Bejahendenfalls (J) wird die Geschwindigkeit der Maschine VPM1 auf die Durchschnittsgeschwindigkeit der Anlage gesetzt (62). Falls nicht (N) wird die Geschwindigkeit der Maschine VPM1 auf ihre minimal mögliche Geschwindigkeit begrenzt (63).

Falls sich bei der obigen Abfrage (57) allerdings ergeben hat, dass nicht beide Maschinen VPM1 und VPM2 gleichzeitig betriebsbereit sind (N) muss eine Maschine ausgefallen sein.

In Schritt (49) wird dann abgefragt, ob die Maschine VPM1 bereit ist. Falls dies der Fall ist (J), muss entsprechend VPM2 ausgefallen sein.

Im Weiteren wird dann abgefragt (64), ob NormVel VPM1 kleiner ist als die maximal einstellbare Geschwindigkeit der Maschine VPM1. Dabei repräsentiert die Geschwindigkeit NormVel VPM1 die verpackungseinheitenbezogene Geschwindigkeit bzw. Leistung der Maschine VPM1 (beispielsweise achtzig Verpackungseinheiten pro Minute).

Falls die Abfrage bejaht wird (J) wird im nächsten Schritt (65) die Geschwindigkeit der Maschine VPM1 auf diese normierte Geschwindigkeit NormVel VPM1 gesetzt. Falls nein (N) wird die Geschwindigkeit der Maschine VPM1 auf die maximal mögliche bzw. maximal einstellbare Maschinengeschwindigkeit gesetzt (66).

Im weiteren Schritt (67) wird abgefragt, ob die Durchschnittsgeschwindigkeit AverageVel der Anlage größer ist als die minimal einstellbare Maschinengeschwindigkeit der Maschine VPM1 (67). Falls dies der Fall ist (J) wird die Geschwindigkeit VPM1 auf die normierte Geschwindigkeit NormVel VPM1 gesetzt (68) . Falls dies nicht der Fall ist (N) wird die Geschwindigkeit der Maschine VPM1 auf das einstellbare Maschinenminimum begrenzt bzw. gesetzt (69).

Sollte die obige Abfrage (63) ergeben haben, dass VPM1 nicht bereit ist, wird die Geschwindigkeit der Maschine VPM1 auf Null gesetzt (70).

Durch den Verarbeitungsblock 71 wird symbolisiert, dass sämtliche der obigen, für die Maschine VPM1 beschriebenen Abfragen und Festlegungen, deren Ergebnis die für die Maschine VPM1 einzustellende Geschwindigkeit ist, sinngemäß bzw. in äquivalenter Weise auch für die nächste Maschine VPM2 durchgeführt werden.

Für den Fall, dass noch weitere Maschinen in der Maschinengruppe enthalten sind, werden entsprechende Schritte auch für die weiteren Maschinen durchgeführt.

Am Ende des Verarbeitungsblocks 71 steht dann dementsprechend sowohl die einzustellende Geschwindigkeit der Maschine VPM1 fest als auch die einzustellende Geschwindigkeit VPM2.

Aus diesen Werten wird im Verarbeitungsblock 72 dann die maximal mögliche Produktionsgeschwindigkeit der Herstellmaschine berechnet.

Diese ergibt sich aus der Formel:

$$\text{Geschwindigkeit VPM1} * \text{Produkte pro Beutel VPM1} + \text{Geschwindigkeit VPM2} * \text{Produkte pro Beutel VPM2}.$$

Diese maximal mögliche Geschwindigkeit wird dann an die Herstellmaschine als Leistungsvorgabewert übergeben.

(72) symbolisiert schließlich das Ende des Ablaufs zur Berechnung und Festlegung der Leistungsvorgabewerte für die Maschinen VPM1, VPM2 sowie die Herstellmaschine.

Die vorgenannten Berechnungen und Abfragen können im Produktionsprozess mehrfach erfolgen, insbesondere aber dann, wenn eine der Maschinen VPM1, VPM2 ausfällt.

Bezugszeichenliste

| | | | |
|---|---|---|---|
| 10 | Fertigungs- und Verpackungsanlage | 35 | Ausschieber |
| | | 36-51 | Symbole Ablaufdiagramme |
| 11 | Hygieneprodukte | 52 | Steuerungsblock |
| 12 | Steuereinheit | 53 | Steuerungsblock |
| 13 | Zuförderer | 54-74 | Symbole Ablaufdiagramme |
| 14 | Befüllungsstation | A | Verpackungsmaschine |
| 15 | Steuereinheit | B | Verpackungsmaschine |
| 16 | Gruppierförderer | C | Verpackungsmaschine |
| 17 | Steuereinheit | D | Verpackungsmaschine |
| 18 | Steuereinheit | F | Herstellmaschine |
| 19 | Steuereinheit | S | Befüllungsorgan |
| 20 | Steuereinheit | | |
| 21 | Verpackung | | |
| 22 | Verpackung | | |
| 23 | Verpackung | | |
| 24 | Verpackung | | |
| 25 | Komprimiereinrichtung | | |
| 26 | Komprimiereinrichtung | | |
| 27 | Zentrale Steuerungseinrichtung | | |
| 28 | Steuerungsblock | | |
| 29 | Steuerungsblock | | |
| 30 | Steuerungsblock | | |
| 31 | Steuerungsblock | | |
| 32 | Sortierung | | |
| 32a | linke Spalte | | |
| 32b | rechte Spalte | | |
| 33 | Steuerungsblock | | |
| 34 | Steuerungsblock | | |

**Patentansprüche**

1. Verfahren zum Betreiben einer Fertigungs- und Verpackungsanlage (10) für Hygieneprodukte (11), wie Windeln, Binden oder dergleichen, bei dem die Hygieneprodukte (11) von einer Herstellmaschine (F) als Fertigungseinheit zum Herstellen derselben hergestellt werden und die hergestellten Hygieneprodukte (11) von mindestens zwei der Herstellmaschine (F) zugeordneten Fertigungseinheiten, nämlich Verpackungsmaschinen (A-D), zum insbesondere versandfertigen Verpacken derselben verpackt werden, wobei die von der Herstellmaschine (F) produzierten Hygieneprodukte (11) vor dem Verpacken einzeln und nacheinander einem bevorzugt kontinuierlich umlaufenden Gruppierförderer (16) mit einzelnen Aufnahmen für die Hygieneprodukte (11) zugefördert werden, dem die mindestens zwei Verpackungsmaschinen (A-D) zugeordnet sind, wobei die einzelnen Aufnahmen jeweils mit einem Hygieneprodukt (11) oder, unter Bildung einer Hygieneproduktgruppe, jeweils mit mehreren Hygieneprodukten (11) befüllt werden, und wobei das einzelne Hygieneprodukt (11) oder die Hygieneproduktgruppe jeder Aufnahme anschließend der jeweiligen Aufnahme des Gruppierförderers (16) entnommen und einer der dem Gruppierförderer (16) zugeordneten Verpackungsmaschinen (A-D) zugefördert wird, die das Hygieneprodukt (11) oder die Hygieneproduktgruppe anschließend, bevorzugt zusammen mit einem oder mehreren Hygieneprodukten (11) oder Hygieneproduktgruppen aus einem oder mehreren weiteren Aufnahmen, in eine geeignete Verpackung (21-24) verpackt, insbesondere in einen Beutel oder eine Faltschachtel oder dergleichen, **dadurch gekennzeichnet, dass** mindestens zwei der dem Gruppierförderer (16) zugeordneten Verpackungsmaschinen (A-D) eine Maschinengruppe bilden, wobei die Anzahl von Hygieneprodukten (11), mit der die einzelnen Aufnahmen des Gruppierförderers (16) jeweils befüllt werden, für jede Aufnahme automatisch abhängig davon gewählt wird, für welche der Verpackungsmaschinen (A-D) der Maschinengruppe das Hygieneprodukt (11) oder die Hygieneproduktgruppe der jeweiligen Aufnahme bestimmt ist.

2. Verfahren gemäß Anspruch 1, **dadurch gekennzeichnet, dass** vor dem Befüllen jeder Aufnahme des Gruppierförderers (16) automatisch jeweils eine der Verpackungsmaschinen (A-D) der Maschinengruppe derart zugeordnet wird, dass das in der entsprechenden Aufnahme befindliche Hygieneprodukt (11) bzw. die darin befindliche Hygieneproduktgruppe für die zugeordnete Verpackungsmaschine (A-D) bestimmt ist und später entsprechend dieser zugeordneten Verpackungsmaschine der Maschinengruppe (A-D) zugeführt wird.

3. Verfahren gemäß einem oder mehreren der vorhergehenden Ansprüche, **dadurch gekennzeichnet, dass** mindestens eine Verpackungsmaschine (A-D) der Maschinengruppe die Hygieneprodukte in Verpackungen (21- 24) verpackt, die sich hinsichtlich der Anzahl der in ihnen enthaltenen Hygieneprodukte (11) von den Verpackungen (21-24) mindestens einer anderen Verpackungsmaschine (A-D) der Maschinengruppe unterscheiden.

4. Verfahren gemäß Anspruch 3, **dadurch gekennzeichnet, dass** die für die Verpackungen (21-24) jeweils vorgesehene Anzahl von Hygieneprodukten (11) bei Befüllung der Aufnahmen des Gruppierförderers (16) automatisch auf mehrere Aufnahmen aufgeteilt wird, wobei sich die Aufteilung der Hygieneprodukte (11) auf die einzelnen Aufnahmen je nach Anzahl der später in der jeweiligen Verpackung (21-24) enthaltenen Hygieneprodukte (11) unterscheidet.

5. Verfahren gemäß Anspruch 4, **dadurch gekennzeichnet, dass** für den Fall eines Ausfalls einer Verpackungsmaschine (A-D) der Maschinengruppe jede der der ausgefallenen Verpackungsmaschine (A-D) zugeordneten Aufnahmen einer anderen Verpackungsmaschine (A-D) der Maschinengruppe zugeordnet wird.

6. Verfahren gemäß Anspruch 5, **dadurch gekennzeichnet, dass** Hygieneprodukte (11) bzw. Hygieneproduktgruppen, die sich bei Ausfall der Verpackungsmaschine (A-D) in dieser Verpackungsmaschine (A-D) in diesem Moment noch zugeordneten Aufnahmen befinden, einer anderen Verpackungsmaschine (A-D) zugeführt werden, insofern die Anzahl der in diesen Aufnahmen befindlichen Hygieneprodukten (11) geeignet ist, von der anderen Verpackungsmaschine (A-D) ordnungsgemäß verpackt zu werden.

7. Verfahren gemäß einem oder mehreren der vorhergehenden Ansprüche, **dadurch gekennzeichnet, dass** die Leistungen der Verpackungsmaschinen (A-D) der Maschinengruppe jeweils automatisch angepasst werden nach Maßgabe der Leistung der Herstellmaschine (F) und/oder nach Maßgabe der einzelnen, jeweils verfügbaren Leistungen der Verpackungsmaschinen (A-D) der Maschinengruppe.

8. Verfahren gemäß Anspruch 7, **dadurch gekennzeichnet, dass** für den Fall, dass die Leistung einer Verpackungsmaschine (A-D) der Maschinengruppe, insbesondere aufgrund einer Störung, reduziert ist oder reduziert wird, insbesondere auf Null, die jeweilige Leistung einer oder jeder anderen Verpackungsmaschine (A-D) der Maschinengruppe automatisch erhöht wird, um den Leistungsrückgang oder Leistungsausfall zu kompensieren.

9. Verfahren gemäß Anspruch 7 oder 8, **dadurch gekennzeichnet, dass** im Normalbetrieb der Verpackungsmaschinen (A-D) der Maschinengruppe deren Leistung nach Maßgabe der Leistung der Herstellmaschine (F) automatisch auf den geringstmöglichen Wert eingestellt wird, bei dem sichergestellt ist, dass sämtliche von der Herstellmaschine (F) hergestellten Hygieneprodukte (11) von den dem Gruppierförderer (16) zugeordneten Verpackungsmaschinen (A-D) verpackt werden können.

10. Verfahren gemäß einem oder mehreren der Ansprüche 7-9, **dadurch gekennzeichnet, dass** für den Fall, dass die maximal einstellbaren Leistungen der dem Gruppierförderer (16) zugeordneten Verpackungsmaschinen (A-D) nicht ausreichen, um sämtliche der bei der gegebenen Leistung der Herstellmaschine (F) von der Herstellmaschine (F) stammenden Hygieneprodukte (11) zu verpacken, die Leistung der Herstellmaschine (F) automatisch auf einen Wert reduziert wird, bei dem sämtliche hergestellten Hygieneprodukte (11) verpackt werden können, bevorzugt auf den größtmöglichen Wert, bei dem die vorgenannte Bedingung erfüllt ist.

11. Verfahren gemäß einem oder mehreren der vorhergehenden Ansprüche 7-10, **dadurch gekennzeichnet, dass** die aktuellen Leistungen der einzelnen Verpackungsmaschinen (A-D) der Maschinengruppe und die aktuelle Leistung der Herstellmaschine (F) erfasst und einer zentralen Steuerungseinrichtung (27) der Anlage (10) übermittelt werden, und dass die zentrale Steuerungseinrichtung (27) abhängig von den erfassten Werten Leistungsvorgaben für die einzelnen Verpackungsmaschinen (A-D) der Maschinengruppe und/oder für die Herstellmaschine (F) ermittelt.

12. Verfahren gemäß Anspruch 11, **dadurch gekennzeichnet, dass** die Leistungsvorgaben jeweils an lokale Maschinensteuerungen (12, 15, 17-20) übermittelt werden, die den einzelnen Verpackungsmaschinen (A-D) sowie der Herstellmaschine (F) jeweils zugeordnet sind.

13. Fertigungs- und Verpackungsanlage für Hygieneprodukte, wie Windeln, Binden oder dergleichen, insbesondere zur Durchführung des Verfahrens gemäß einem oder mehreren der vorhergehenden Ansprüche, mit einer Herrstellmaschine als Fertigungseinheit zum Herstellen der Hygieneprodukte und mindestens zwei Fertigungseinheiten, nämlich Verpackungsmaschinen (A-D), zum insbesondere versandfertigen Verpacken derselben, mit einem bevorzugt kontinuierlich umlaufenden Gruppierförderer (16) mit einzelnen Aufnahmen für die Hygieneprodukte (11), dem die mindestens zwei Verpackungsmaschinen (A-D) zugeordnet sind, und dem die von der Herstellmaschine (F) produzierten Hygieneprodukte (11) vor dem Verpacken einzeln und nacheinander zuförderbar sind, wobei die einzelnen Aufnahmen jeweils mit einem Hygieneprodukt (11) oder, unter Bildung einer Hygieneproduktgruppe, jeweils mit mehreren Hygieneprodukten (11) befüllbar sind, und wobei das einzelne Hygieneprodukt (11) oder die Hygieneproduktgruppe jeder Aufnahme anschließend der jeweiligen Aufnahme des Gruppierförderers (16) entnehmbar und einer der dem Gruppierförderer (16) zugeordneten Verpackungsmaschinen (A-D) zuförderbar ist, mit der das Hygieneprodukt (11) oder die Hygieneproduktgruppe anschließend, bevorzugt zusammen mit einem oder mehreren Hygieneprodukten (11) oder Hygieneproduktgruppen aus einer oder mehreren weiteren Aufnahmen, in eine geeignete Verpackung (21-24) verpackbar ist, insbesondere in einen Beutel oder eine Faltschachtel oder dergleichen, **dadurch gekennzeichnet, dass** mindestens zwei der dem Gruppierförderer (16) zugeordneten Verpackungsmaschinen (A-D) eine Maschinengruppe bilden, wobei eine Steuereinrichtung (27) vorgesehen ist, die derart ausgebildet ist, dass die Anzahl von Hygieneprodukten (11), mit der die einzelnen Aufnahmen des Gruppierförderers (16) jeweils befüllt werden, für jede Aufnahme automatisch abhängig davon gewählt wird, für welche der Verpackungsmaschinen (A-D) der Maschinengruppe das Hygieneprodukt (11) oder die Hygieneproduktgruppe der jeweiligen Aufnahme bestimmt ist.

14. Fertigungs- und Verpackungsanlage gemäß Anspruch 13, **dadurch gekennzeichnet, dass** die Hygieneprodukte (11) mittels eines Zuführförderers (13) einzeln und nacheinander in Richtung des Gruppierförderers (16) förderbar sind, wobei die einzelnen Aufnahmen des Gruppierförderers (16) mittels eines insbesondere im Wesentlichen kegelförmigen Befüllungsorgans (S) mit den von dem Zuführförderer (13) stammenden Hygieneprodukten (11) befüllbar sind, insbesondere unter Bildung von Gruppen von Hygieneprodukten (11).

15. Fertigungs- und Verpackungsanlage gemäß Anspruch 13 oder 14, **dadurch gekennzeichnet, dass** die Leistungen der Verpackungsmaschinen (A-D) der Maschinengruppe jeweils automatisch angepasst werden nach Maßgabe der Leistung der Herstellmaschine (F) und/oder nach Maßgabe der einzelnen, jeweils verfügbaren Leistungen sämtlicher Verpackungsmaschinen (A-D) der Maschinengruppe.

**Claims**

1. A method for operating a production and packaging installation (10) for hygiene products (11), such as diapers, sanitary napkins or the like, in the case of which the hygiene products (11) are produced by a production machine (F) as the production unit for producing the same and the hygiene products (11) produced are packaged by at least two production units, namely packaging machines (A-D), which are assigned to the production machine (F) and are intended for packaging the hygiene products in particular so that they are ready for dispatch, wherein, prior to the packaging operation, the hygiene products (11) produced by the production machine (F) are supplied individually, and one after the other, to a preferably continuously circulating grouping conveyor (16) which has individual holders for the hygiene products (11) and to which the at least two packaging machines (A-D) are assigned, wherein the individual holders are filled in each case with a hygiene product (11) or, so as to form a hygiene-product group, in each case with a plurality of hygiene products (11), and wherein the individual hygiene product (11) or the hygiene-product group of each holder is then removed from the respective holder of the grouping conveyor (16) and supplied to one of the packaging machines (A-D) which is assigned to the grouping conveyor (16) and then packages the hygiene product (11) or the hygiene-product group, preferably together with one or more hygiene products (11) or hygiene-product groups from one or more further holders, into a suitable pack (21-24), in particular into a bag or a folding box or the like, **characterized in that** at least two of the packaging machines (A-D) assigned to the grouping conveyor (16) form a machine group, wherein the number of hygiene products (11) with which the individual holders of the grouping conveyor (16) are filled in each case is selected automatically for each holder in dependence on which of the packaging machines (A-D) of the machine group the hygiene product (11) or the hygiene-product group of the respective holder is intended for.

2. The method as claimed in claim 1, **characterized in that,** prior to the filling operation, each holder of the grouping conveyor (16) is assigned automatically in each case to one of the packaging machines (A-D) of the machine group such that the hygiene product (11) located in the corresponding holder, or the hygiene-product group located therein, is intended for the associated packaging machine (A-D) and is subsequently fed, correspondingly, to said associated packaging machine of the machine group (A-D).

3. The method according to one or more of the preceding claims, **characterized in that** at least one packaging machine (A-D) of the machine group packages the hygiene products into packs (21-24) which, in respect of the number of hygiene products (11) contained therein, differ from the packs (21-24) of at least one other packaging machine (A-D) of the machine group.

4. The method as claimed in claim 3, **characterized in that,** during the operation of filling the holders of the grouping conveyor (16), the number of hygiene products (11) provided in each case for the packs (21-24) is divided up automatically between a plurality of holders, wherein the operations of dividing up the hygiene products (11) between the individual holders differ in dependence on the number of hygiene products (11) subsequently contained in the respective pack (21-24).

5. The method as claimed in claim 4, **characterized in that** in the event of a packaging machine (A-D) of the machine group failing, each of the holders assigned to the failed packaging machine (A-D) is assigned to another packaging machine (A-D) of the machine group.

6. The method as claimed in claim 5, **characterized in that** hygiene products (11) or hygiene-product groups which, in the event of the packaging machine (A-D) failing, are located in holders still currently assigned to said packaging machine (A-D) are fed to another packaging machine (A-D), provided the number of hygiene products (11) located in said holders is suitable for being packaged properly by the other packaging machine (A-D).

7. The method as claimed in one or more of the preceding claims, **characterized in that** the performances of the packaging machines (A-D) of the machine group are adapted automatically in each case in accordance with the performance of the production machine (F) and/or in accordance with the individual performances available for the packaging machines (A-D) of the machine group.

8. The method as claimed in claim 7, **characterized in that,** for the case where the performance of a packaging machine (A-D) of the machine group has been, or is being, reduced, in particular to zero, in particular on account of a fault, the respective performance of one or any other packaging machine (A-D) of the machine group is increased automatically in order to compensate for the performance drop or performance failure.

9. The method as claimed in claim 7 or 8, **characterized in that,** during normal operation of the packaging machines (A-D) of the machine group, the performance thereof is adjusted automatically, in accordance with the performance of the production machine (F), to the smallest possible value at which it is ensured that all of the hygiene products (11) produced by the production machine (F) can be packaged by the packaging machines (A-D) assigned to the grouping conveyor (16).

10. The method as claimed in one or more of claims 7-9, **characterized in that,** for the case where the maximum-adjustment performances of the packaging machines (A-D) assigned to the grouping conveyor (16) are insufficient for packaging all of the hygiene products (11) which come from the production machine (F) at the given level of performance of the production machine (F), the performance of the production machine (F) is reduced automatically to a value at which all the hygiene products (11) produced can be packaged, preferably to the largest possible value at which the aforementioned condition is met.

11. The method as claimed in one or more of preceding claims 7-10, **characterized in that** the current performances of the individual packaging machines (A-D) of the machine group and the current performance of the production machine (F) are sensed and communicated to a central control device (27) of the installation (10), and **in that**, in dependence on the values sensed, the central control device (27) determines specified performance values for the individual packaging machines (A-D) of the machine group and/or for the production machine (F).

**12.** The method as claimed in claim 11, **characterized in that** the specified performance values are communicated in each case to local machine-control means (12, 15, 17-20), which are assigned in each case to the individual packaging machines (A-D) and the production machine (F).

**13.** A production and packaging installation for hygiene products, such as diapers, sanitary napkins or the like, in particular for implementing the method as claimed in one or more of the preceding claims, having a production machine as the production unit for producing the hygiene products and at least two production units, namely packaging machines (A-D), for packaging the hygiene products in particular so that they are ready for dispatch, having a preferably continuously circulating grouping conveyor (16) which has individual holders for the hygiene products (11) and to which the at least two packaging machines (A-D) are assigned, and to which the hygiene products (11) produced by the production machine (F) can be supplied individually, and one after the other, prior to the packaging operation, wherein the individual holders can be filled in each case with a hygiene product (11) or, so as to form a hygiene-product group, in each case with a plurality of hygiene products (11), and wherein the individual hygiene product (11) or the hygiene-product group of each holder can then be removed from the respective holder of the grouping conveyor (16) and supplied to one of the packaging machines (A-D) which is assigned to the grouping conveyor (16) and by means of which the hygiene product (11) or the hygiene-product group can then be packaged, preferably together with one or more hygiene products (11) or hygiene-product groups from one or more further holders, into a suitable pack (21-24), in particular into a bag or a folding box or the like, **characterized in that** at least two of the packaging machines (A-D) assigned to the grouping conveyor (16) form a machine group, wherein a control device (27) is provided, and this is designed such that the number of hygiene products (11) with which the individual holders of the grouping conveyor (16) are filled in each case is selected automatically for each holder in dependence on which of the packaging machines (A-D) of the machine group the hygiene product (11) or the hygiene-product group of the respective holder is intended for.

**14.** The production and packaging installation as claimed in claim 13, **characterized in that** the hygiene products (11) can be conveyed individually, and one after the other, in the direction of the grouping conveyor (16) by means of a feed conveyor (13), wherein the individual holders of the grouping conveyor (16) can be filled, by means of an in particular essentially conical filling mechanism (S), with the hygiene products (11) coming from the feed conveyor (13), in particular so as to form groups of hygiene products (11).

**15.** The production and packaging installation as claimed in claim 13 or 14, **characterized in that** the performances of the packaging machines (A-D) of the machine group are adapted automatically in each case in accordance with the performance of the production machine (F) and/or in accordance with the individual performances available for all of the packaging machines (A-D) of the machine group.

**Revendications**

**1.** Procédé de conduite d'une installation (10) de fabrication et d'emballage de produits d'hygiène (11) tels que des couches, des serviettes hygiéniques ou similaires, dans lequel les produits hygiéniques (11) sont fabriqués par une machine de fabrication (F) qui sert d'unité de fabrication en vue de les fabriquer et les produits d'hygiène (11) fabriqués sont emballés par au moins deux unités de fabrication associées à la machine de fabrication (F), à savoir des machines d'emballage (A-D), en particulier pour les emballer prêts à l'expédition,
les produits d'hygiène (11) produits par la machine de fabrication (F) étant amenés un à un et successivement à un transporteur (16) de groupage circulant de préférence en continu en boucle fermée et présentant des logements individuels pour les produits d'hygiène (11),
deux ou plusieurs machines d'emballage (A-D) étant associées au transporteur de groupage, chacun des différents logements étant rempli d'un produit d'hygiène (11) ou de plusieurs produits d'hygiène (11) en formant un groupe de produits d'hygiène,
le produit d'hygiène (11) ou le groupe de produits d'hygiène de chaque logement étant ensuite prélevé dans chaque logement du transporteur de groupage (16) et apporté à une des machines d'emballage (A-D), associée au transporteur de groupage (16), qui emballe dans un emballage approprié (21-24) le produit d'hygiène (11) ou le groupe de produits d'hygiène, de préférence en même temps qu'un ou plusieurs produits d'hygiène (11) ou groupes de produits d'hygiène provenant d'un ou plusieurs autres logements, en particulier pour former un sac, une boîte rabattable ou similaires,
**caractérisé en ce que**
au moins deux des machines d'emballage (A-D) associées au transporteur de groupage (16) forment un groupe de machines,

**en ce que** le nombre de produits d'hygiène (11) duquel les différents logements du transporteur de groupage (16) peuvent être remplis est sélectionné automatiquement pour chaque logement en fonction de la machine d'emballage (A-D) du groupe de machines pour laquelle le produit d'hygiène (11) ou le groupe de produits d'hygiène de chaque logement est défini.

2.  Procédé selon la revendication 1, **caractérisé en ce qu'**avant le remplissage de chaque logement du transporteur de groupage (16), une des machines d'emballage (A-D) est associée automatiquement au groupe de machines, **en ce que** le produit d'hygiène (11) ou le groupe de produits d'hygiène présent dans le logement concerné est défini pour la machine d'emballage (A-D) associée et est ensuite amené au groupe de machines (A-D) en correspondance à cette machine d'emballage associée.

3.  Procédé selon l'une ou plusieurs des revendications précédentes, **caractérisé en ce qu'**au moins une machine d'emballage (A-D) du groupe de machines emballage des produits d'hygiène dans les emballages (21-24) qui se distinguent par le nombre des produits d'hygiène (11) qu'il contient des emballages (21-24) d'au moins une autre machine d'emballage (A-D) du groupe de machines.

4.  Procédé selon la revendication 3, **caractérisé en ce que** le nombre de produits d'hygiène (11) prévu pour chacun des emballages (21-24) est réparti automatiquement entre plusieurs logements lors du remplissage des logements du transporteur de groupage (16), la répartition de produits d'hygiène (11) entre les différents logements se distinguant par le nombre des produits d'hygiène (11) que contiendra plus tard chaque emballage (21-24).

5.  Procédé selon la revendication 4, **caractérisé en ce qu'**au cas où une machine d'emballage (A-D) du groupe de machines tombe en panne, chacun des logements associés à la machine d'emballage (A-D) en panne est associé à une autre machine d'emballage (A-D) du groupe de machines.

6.  Procédé selon la revendication 5, **caractérisé en ce que** des produits d'hygiène (11) ou groupes de produits d'hygiène qui se trouvent dans des logements qui à ce moment sont encore associés à une machine d'emballage (A-D) au moment de la défaillance de la machine d'emballage (A-D) sont apportés à une autre machine d'emballage (A-D) pour autant que le nombre des produits d'hygiène (11) présents dans ces logements convient pour être emballés correctement par d'autres machines d'emballage (A-D).

7.  Procédé selon l'une ou plusieurs des revendications précédentes, **caractérisé en ce que** la capacité des machines d'emballage (A-D) du groupe de machines est adaptée automatiquement à la capacité de la machine de fabrication (F) et/ou à la capacité disponible de chacune des machines d'emballage (A-D) du groupe de machines.

8.  Procédé selon la revendication 7, **caractérisé en ce qu'**au cas où la capacité d'une machine d'emballage (A-D) du groupe de machines a été réduite, en particulier à zéro, notamment du fait d'une perturbation, la capacité d'une autre ou de chaque autre machine d'emballage (A-D) du groupe de machines est augmentée automatiquement pour compenser la réduction de capacité ou la suppression de capacité.

9.  Procédé selon les revendications 7 ou 8, **caractérisé en ce qu'**en fonctionnement normal des machines d'emballage (A-D) du groupe de machines, leur capacité est définie automatiquement en fonction de la capacité de la machine de fabrication (F) à la valeur la plus basse possible qui garantit que tous les produits d'hygiène (11) fabriqués par la machine de fabrication (F) puissent être emballés par les machines d'emballage (A-D) associées au transporteur de groupage (16) .

10. Procédé selon l'une ou plusieurs des revendications 7 à 9, **caractérisé en ce qu'**au cas où la capacité maximale possible des machines d'emballage (AD) associées au transporteur de groupage (16) ne suffit pas pour emballer tous les produits d'hygiène (11) qui proviennent de la machine de fabrication (F) à la capacité donnée de la machine de fabrication (F), la capacité de la machine de fabrication (F) est réduite automatiquement à une valeur par laquelle tous les produits d'hygiène (11) fabriqués peuvent être emballés et de préférence à la valeur la plus grande possible pour laquelle la condition ci-dessus est satisfaite.

11. Procédé selon l'une ou plusieurs des revendications 7 à 10, **caractérisé en ce que** les capacités effectives des différentes machines d'emballage (A-D) du groupe de machines et la capacité effective de la machine de fabrication (F) sont saisies et sont transmises à un dispositif central de commande (27) de l'installation (10) et **en ce que** le dispositif de commande centrale (27) détermine en fonction des valeurs saisies les capacités définies pour les différentes machines d'emballage (A-D) du groupe de machines et/ou de la machine de fabrication (F).

**12.** Procédé selon la revendication 11, **caractérisé en ce que** les capacités définies sont transmises à des commandes locales (12, 15, 17-20) de machines qui sont associées aux différentes machines d'emballage (A-D) ainsi qu'à la machine de fabrication (F).

**13.** Installation de fabrication et d'emballage de produits d'hygiène, par exemple des couches, des serviettes hygiéniques ou similaires, en particulier en vue de la mise en oeuvre du procédé selon l'une ou plusieurs des revendications précédentes, et présentant

une machine de fabrication qui sert d'unité de fabrication en vue de fabriquer les produits d'hygiène et au moins deux unités de fabrication, à savoir des machines d'emballage (A-D), en particulier pour les emballer prêts à l'expédition,

un transporteur (16) de groupage circulant de préférence en continu en boucle fermée, auquel deux ou plusieurs machines d'emballage (A-D) sont associées, présentant des logements individuels pour les produits d'hygiène (11) et auquel les produits d'hygiène (11) produits par la machine de fabrication (F) peuvent être amenés un à un et successivement avant l'emballage, à

chacun des différents logements pouvant être rempli d'un produit d'hygiène (11) ou de plusieurs produits d'hygiène (11) en formant un groupe de produits d'hygiène,

le produit d'hygiène (11) séparé ou le groupe de produits d'hygiène de chaque logement pouvant ensuite être prélevé dans chaque logement du transporteur de groupage (16) et apporté à une des machines d'emballage (A-D), associée au transporteur de groupage (16), par laquelle le produit d'hygiène (11) ou le groupe de produits d'hygiène, peut être emballé dans un emballage approprié (21-24) de préférence en même temps qu'un ou plusieurs produits d'hygiène (11) ou groupes de produits d'hygiène provenant d'un ou plusieurs autres logements, en particulier pour former un sac, une boîte rabattable ou similaires,

**caractérisé en ce que**

au moins deux des machines d'emballage (A-D) associées au transporteur de groupage (16) forment un groupe de machines, un dispositif de commande (27) étant prévu, lequel est conçu de telle sorte que le nombre de produits d'hygiène (11) duquel les différents logements du transporteur de groupage (16) peuvent être remplis est sélectionné automatiquement pour chaque logement en fonction de la machine d'emballage (A-D) du groupe de machines pour laquelle le produit d'hygiène (11) ou le groupe de produits d'hygiène de chaque logement est défini.

**14.** Installation de fabrication et d'emballage selon la revendication 13, **caractérisée en ce que** les produits d'hygiène (11) peuvent être transportés un à un et successivement en direction du transporteur de groupe (16) au moyen d'un transporteur d'amenée (13), les différents logements du transporteur de groupage (16) pouvant être remplis des produits d'hygiène (11) provenant du transporteur d'amenée (13) au moyen d'un organe de remplissage (S) en particulier essentiellement en forme de cône, notamment pour former des groupes de produits d'hygiène (11).

**15.** Installation de fabrication et d'emballage selon les revendications 13 ou 14, **caractérisée en ce que** la capacité d'une machine d'emballage (A-D) du groupe de machines est adaptée automatiquement à la capacité de la machine de fabrication (F) et/ou à la capacité disponible de chacune des différentes machines d'emballage (A-D) du groupe de machines.

*Fig. 1*

EP 2 882 653 B1

**Fig. 2**

EP 2 882 653 B1

# Fig. 3

Fig. 4

EP 2 882 653 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005055988 A1

- DE 102010053040